Europäisches Patentamt

European Patent Office

Office européen des brevets

(11) Publication number: **0 685 808 A1**

# EUROPEAN PATENT APPLICATION
## published in accordance with Art. 158(3) EPC

(21) Application number: 94907085.8

(22) Date of filing: 22.02.94

(86) International application number:
PCT/JP94/00264

(87) International publication number:
WO 94/19762 (01.09.94 94/20)

(51) Int. Cl.6: **G06G 7/60**

(30) Priority: 22.02.93 JP 32312/93

(43) Date of publication of application:
06.12.95 Bulletin 95/49

(84) Designated Contracting States:
CH DE FR GB IT LI NL

(71) Applicant: **SHIBATA, Tadashi**
**5-2, Nihondairai,**
**Taihaku-ku**
**Sendai-shi,**
**Miyagi-ken 980-02 (JP)**
Applicant: **OHMI, Tadahiro**
**1-17-301, Komegabukuro 2-chome**
**Aoba-ku**
**Sendai-shi**
**Miyagi-ken 980 (JP)**

(72) Inventor: **SHIBATA, Tadashi**
**5-2, Nihondaira**
**Taihaku-ku**
**Sendai-shi**
**Miyagi-ken 980 (JP)**
Inventor: **OHMI, Tadahiro**
**1-17-301, Komegabukuro 2-chome**
**Aoba-ku**
**Sendai-shi**
**Miyagi-ken 980 (JP)**
Inventor: **KOTANI, Koji, Dept of Electronics**
**Faculty of**
**Engineering**
**Tohoku University,**
**Aza-Aoba, Aramaki**
**Aoba-ku, Sendai-shi,**
**Miyagi-ken 980 (JP)**

(74) Representative: **Weitzel, Wolfgang, Dr.-Ing.**
**Patentanwalt**
**Friedenstrasse 10**
**D-89522 Heidenheim (DE)**

(54) **COMPUTING DEVICE.**

(57) A novel computing device capable of performing flexible information processing analogous to that of living things, such as learning, adaption, and self-multiplication, which are essential to implement advanced information processing of the future. The device comprises a plurality of first and second input terminals, and a plurality of operational units which execute a given operation of data signals to be inputted into the first input terminals, and each have at least one terminal for outputting the result of the operation. The output signal from one of the output terminals or the result of a given operational processing of this output signal is inputted into at least one of the second input terminals.

Fig. 1

Technical Field

The present invention relates to data processing technology, and in particular, relates to a computing device which makes flexible data processing possible.

Background Art

Conventionally, the central CPU of computers which conducted data processing technologies comprised semiconductor LSI, and this is termed "hardware". The reason for this is that once the CPU has been constructed, the structure thereof cannot be changed, and it is thus an inflexible structure. Computers can only execute a variety of functions by executing operations in order in the circuits in which these functions are fixed by means of programming. However, in order to realize the high level data processing of the future, it will be necessary to provide data processing such as that conducted by living things, such as learning, adaptation, and self-multiplication such as that performed by human beings; presently, no such computers exist.

There have been a number of attempts to realize flexible data processing by means of software technologies; however, the current state is such that such efforts have met with little success. The reason for this is that hardware, which is inflexible, is used as the base, and even if this is realized in an imitative manner, the burden on the software becomes excessively large, and an enormous amount of time is required even if a supercomputer is employed, so that it is impossible to construct a system which is capable of rapid response.

The so-called "neural networks", which imitate the data processing of the human brain, have been researched and developed as one powerful method for solving such problems; however, these are still far from practical application. The reason for this is that the data processing of the human brain itself is poorly understood, so that the network imitates an extremely primitive structure, and there is no concrete theoretical construction method.

With respect to this, a high performance transistor, termed a "neuron MOS transistor" (inventors: Tadashi Shibata, Tadahiro Ohmi, Japanese Patent Application, Provisional Publication, No. Hei 3-6679) has been invented, and a soft-hardware circuit to which this is applied (inventors: Tadashi Shibata, Tadahiro Ohmi, Japanese Patent Application No. Hei 3-83135) has been invented. In particular, this soft-hardware circuit possesses extremely flexible hardware, the computing functions of which can be freely altered in response to an external signal. When such flexible hardware is employed as the base, there is a possibility of realizing the flexible data processing which was discussed in the opening paragraph; however, a method for this realization has not as yet been made clear.

The present invention has as an object thereof to provide a novel computing device which is capable of forming flexible information processing analogous to that of living things, such as learning, adaptation, and self-multiplication, which are essential to the realization of advanced information processing of the future.

Brief Description of the Diagrams

Fig. 1 is a block diagram explaining the first embodiment.
Fig. 2 is a conceptual diagram of a 4-input N-channel $\nu$MOS transistor.
Fig. 3 is a circuit diagram showing an example of a neuron circuit.
Fig. 4 is an FPD explaining the operation of a neuron circuit.
Fig. 5 is a circuit diagram showing a diagram of a neuron circuit.
Fig. 6 is a circuit diagram showing a diagram of SHL.
Fig. 7 is FPD of a $\nu$MOS inverter 302.
Fig. 8 is a circuit diagram of SD number full adder explaining a second embodiment.
Fig. 9 is a circuit diagram showing an SD number full adder explaining the second embodiment.
Fig. 10 shows the FPD of a $\nu$MOS inverter.
Fig. 11 shows the FPD of a $\nu$MOS inverter.
Fig. 12 shows the FPD of a $\nu$MOS inverter.
Fig. 13 shows the FPD of a $\nu$MOS inverter.
Fig. 14 shows a circuit which conducts the addition of binary SD numbers.
Fig. 15 is a block diagram for explaining a third embodiment.
Fig. 16 is a block diagram for explaining a third embodiment.

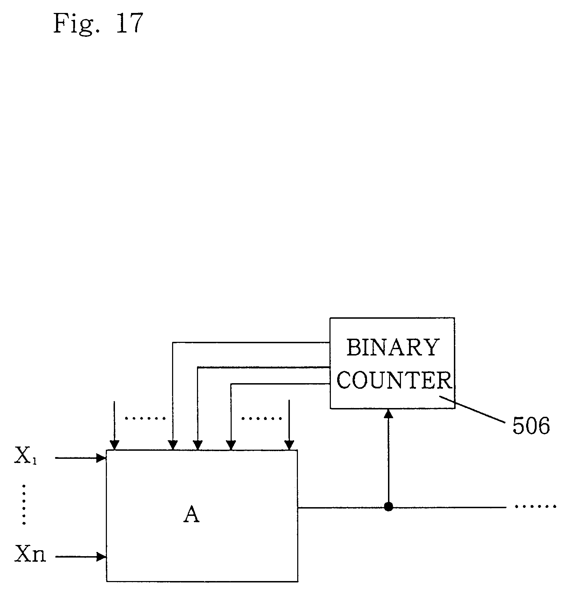

Fig. 17 is a block diagram showing a fourth embodiment.
Fig. 18 is a circuit diagram showing another example of the present invention.

(Description of the References)

101a, 101b, 101c, 101d logical computing units,
102a, 102b input terminals,
103 output terminal
104a, 104b, 104c, 104d control signal input terminals,
105b, 105c control input terminals,
201 substrate,
202, 203 source and drain
204 gate insulating film (for example, $SiO_2$ film),
205 channel region,
206 floating gate electrode,
207 insulating film,
208a, 208b, 208c, 208d control gate electrodes,
210 N-channel $\nu$MOS,
211 P-channel $\nu$MOS,
212 $\nu$MOS inverter,
213 standard inverter,
214 floating gate,
301 D/A converter,
302, 303, 304, 305, 306 $\nu$MOS inverters.

Disclosure of the Invention

The computing device in accordance with the present invention is provided with a plurality of first input terminals and a plurality of second input terminals, and a plurality of operational units which execute given operational processing with respect to data signals which are inputted into the first input terminal, by means of control signals inputted into the second input terminals, and which each have at least one output terminal for outputting the results of the operation; characterized in that the output signal from one of the output terminals or the result of a given operational processing of this output signal is inputted to at least one of the second input terminals.

Best Mode for Carrying Out the Invention

Hereinbelow, embodiments of the present invention will be explained using the diagrams.

(Embodiment 1)

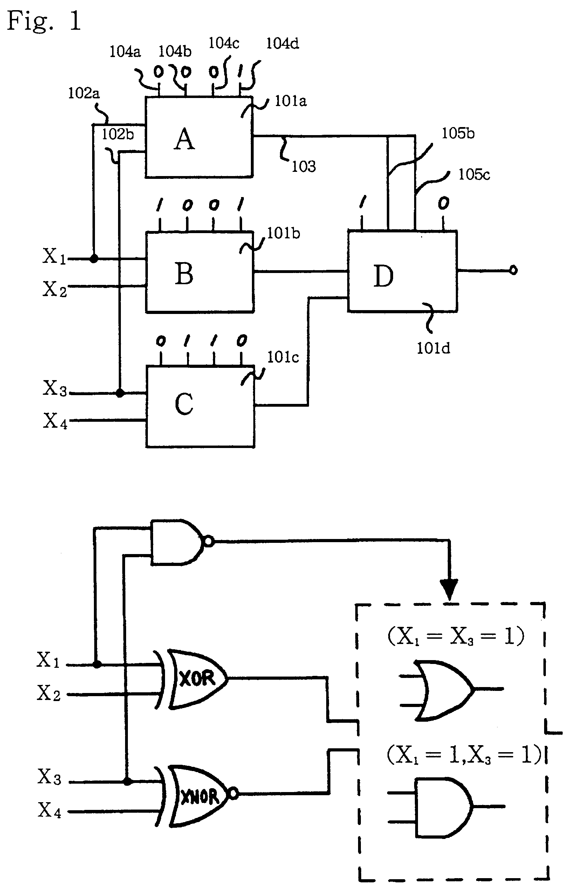

Fig. 1(a) is a block diagram showing a first embodiment of the invention. This circuit conducts the following operational processing with respect to 4 digital input signals $X_1 \sim X_4$. If $X_1 = X_3 = 1$, then when $X_2 = 0$ or $X_4 = 1$, "1" is outputted, and in all other cases, that is to say, in cases in which one or the other of $X_1$ or $X_3$ is not equal to 1, a value of "1" is outputted only when $X_1 \neq X_2$ and $X_3 = X_4$.

The present circuit is comprised by connecting four logical operational units A, B, C, and D (101a ~ 101d) to one another by means of wiring. Each operational unit is provided with two input terminals (102a, 102b, and the like), one output terminal 103, and four control signal input terminals (104a, 104b, 104c, 104d, and the like), and the operational functions are stipulated by means of a signal having a value of 0 or 1 which is inputted into the control input terminals. A value of 0 indicates that 0V and a value of 1 indicates that the power source voltage $V_{DD}$ (5V), respectively, are applied to the input terminals. In such a circuit, soft-hardware logical circuits (Japanese Patent Application No. Hei 3-83135) using, for example, neuron MOS transistors (Japanese Patent Application, Provisional Publication, No. Hei 3-6679) may be employed. The neuron MOS transistor and the soft-hardware logical circuit are separately explained.

The blocks A, B, and C become, respectively, NAND circuits, XOR circuits, and XNOR circuits, in response to the input signals into the control input terminals (104a ~ 104d) which are shown in the figure. In the case of block D, the two control input terminals 105b and 105c have the outputs of block A (NAND circuit) inputted thereinto rather than fixed signals, so that if the output 103 has a value of 0, this block becomes an OR circuit, while if the value is 1, the block becomes an AND circuit. These relationships are depicted in a simplified form in Fig. 1(b).

4

The portion corresponding to block D has functions which differ depending on the results of the NAND operation of $X_1$ and $X_3$.

As shown above, in the present embodiment, the circuit executes a flexible operational function by means of altering the functions of a portion of a circuit or altering the functions of the entirety of the circuit by means of the operational results.

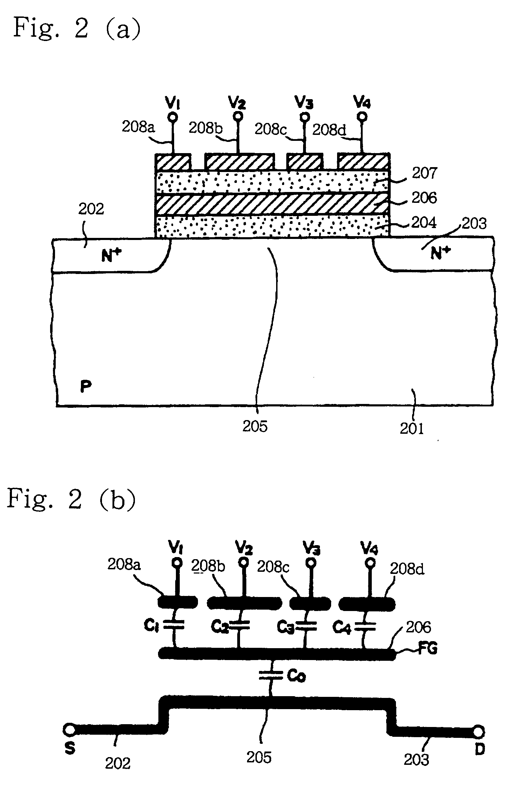

In the foregoing, an extremely simplified case was shown, so that the importance of this novel flexible function may not be clear; however, this will be discussed in detail in the second embodiment, after the explanation of the neuron MOS transistor and the soft-hardware logical circuit using, respectively, Figs. 2 ~ 7.

First, the structure and operational principle of the neuron MOS transistor (hereinbelow abbreviated to "$\nu$MOS") will be explained. Fig. 2 shows an example of the cross sectional structure of a 4-input N-channel $\nu$MOS transistor; reference 201 indicates, for example, a P-type silicon substrate, references 202 and 203 indicate a source and drain formed from $N^+$ diffusion layers, reference 204 indicates a gate insulating film (for example, $SiO_2$ film) which is provided on channel region 205 between the source and the drain, reference 206 indicates a floating gate electrode which is electrically insulated and is in a potentially floating state; reference 207 indicates an insulating film comprising, for example, $SiO_2$, and references 208a, 208b, 208c, and 208d indicate control gate electrodes. Fig. 2(b) shows a further simplified version of this for the purposes of analyzing the operation of the $\nu$MOS. If the capacitive coupling coefficients between each control gate electrode and the floating gate are represented by $C_1$, $C_2$, $C_3$, and $C_4$, as in the figure, and the capacitive coupling coefficient between the floating gate and the silicon substrate is represented by $C_0$, then the potential $\Phi_F$ of the floating gate is given by the following formulas.

$$\Phi_F = (1/C_{TOT}) (C_1 V_1 + C_2 V_2 + C_3 V_3 + C_4 V_4) \qquad (1)$$
$$\text{Here, } C_{TOT} = C_0 + C_1 + C_2 + C_3 + C_4 \qquad (2)$$

$V_1$, $V_2$, $V_3$, and $V_4$ indicate voltages which are applied to, respectively, input gates 208a, 208b, 208c, and 208d, and the potential of the silicon substrate is 0V, so that it is grounded.

Now, the potential of source 202 is set to 0V. That is to say, it is set to a value in which the potentials of all the electrodes are measured using the source as a standard. In this way, if the floating gate 206 is seen as a standard gate electrode, the $\nu$MOS shown in Fig. 2 becomes equivalent to a standard N-channel MOS transistor, and when the gate potential $\Phi_F$ thereof exceeds a threshold value ($V_{TH}^*$), the source and the drain become electrically connected. That is to say, from formula (1), the $\nu$MOS becomes conductive (enters an ON state) when the following conditions are met.

$$(C_{TOT}) (C_1 V_1 + C_2 V_2 + C_3 V_3 + C_4 V_4) > V_{TH}^* \qquad (3)$$

The foregoing explanation referred to an N-channel MOS transistor; however, there are devices having the structure shown in Fig. 2(a) in which the source 202, the drain 203, and the substrate 201 are all of the opposite conductivity type. That is to say, such a $\nu$MOS has an N-type substrate, and the source and drain are formed from $P^+$ diffusion layers, and this is termed a "P-channel MOS transistor".

Neuron Circuit, Soft-Hardware Logical Circuit

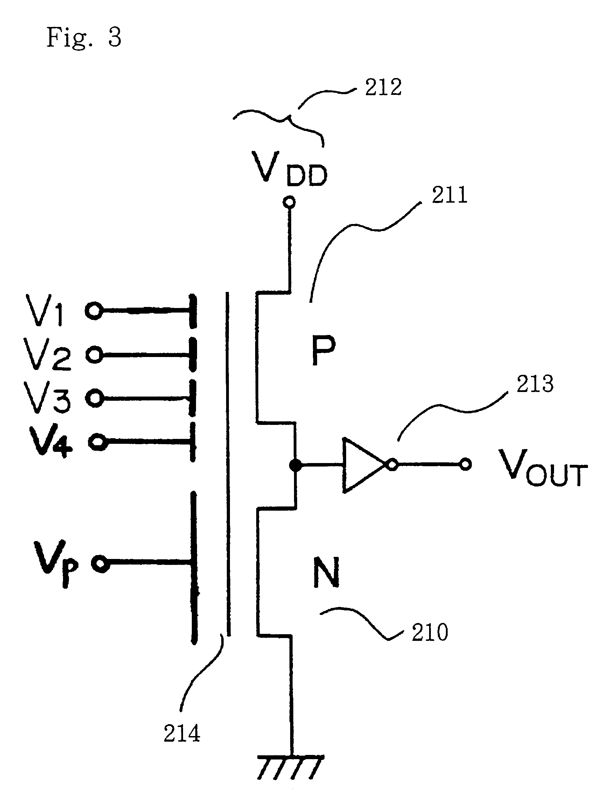

Next, the most fundamental circuit used in the $\nu$MOS, the neuron circuit, and the operation thereof will be explained using Fig. 3. The neuron circuit comprises a $\nu$MOS inverter 212, comprising a N-channel $\nu$MOS 210 and a P-channel $\nu$MOS 211, and a standard inverter 213. This circuit is such that the $\nu$MOS inverter inverts when the potential $\Phi_F$ of the common floating gate 214 exceeds the inversion voltage (1/2) $V_{DD}$ of the $\nu$MOS inverter, and $V_{OUT}$ becomes "1". In the figure, the capacitive coupling coefficients of the $V_1 \sim V_4$ gates are all set to (1/8) $C_{TOT}$, and the capacitive coupling coefficient of the $V_P$ gate is set to (1/2) $C_{TOT}$, and for the purposes of simplicity, it is assumed that $C_0 = 0$. The $V_P$ gate is termed the "main electrode" of the $\nu$MOS inverter.

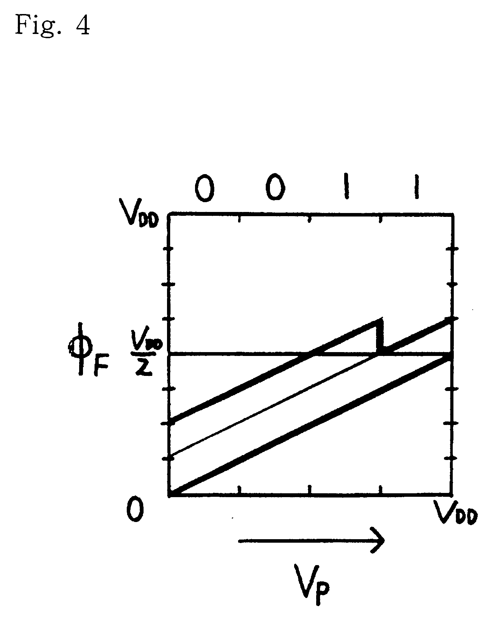

It is possible to analyze the operation of this circuit in a simple manner by means of the floating gate potential diagram (abbreviated to "FPD") shown in Fig. 4. the FPD depicts $\Phi_F$ as a function of $V_P$, and if $V_1 \sim V_4 = 0$, then when $V_P$ changes from 0 to $V_{DD}$, $\Phi_F$ changes from 0 to (1/2) $V_{DD}$. This is because the coupling capacity of $V_P$ is (1/2) $C_{TOT}$. That is to say, the potential of the neuron circuit is constantly 0.

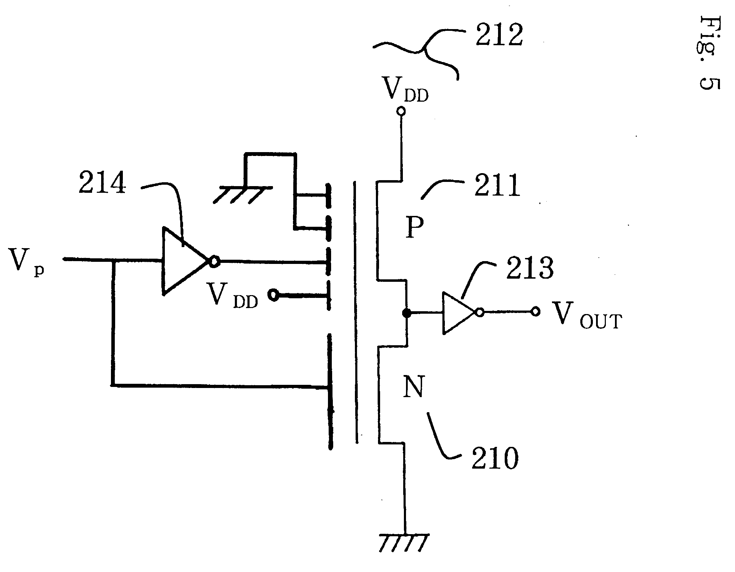

In the example shown in Fig. 4, $V_1 = V_2 = 0$, $V_4 = V_{DD}$, and $V_3$ has a value of $V_{DD}$ when $V_P$ is within a range of 0 ~ (3/4) $V_{DD}$, and a value of 0 when $V_P > $ (3/4) $V_{DD}$. In this way, $\Phi_F$ is such that a value of $V_{OUT}$ of 1 is outputted when $V_P > $ (1/2) $V_{DD}$. In order to realize such a circuit, as shown in Fig. 5, $V_P$ may be passed through a pre-inverter 214 having a threshold value of (3/4) $V_{DD}$ before being inputted into $V_3$. Such circuits are the basis of the soft-hardware logic circuits (abbreviated to "SHL").

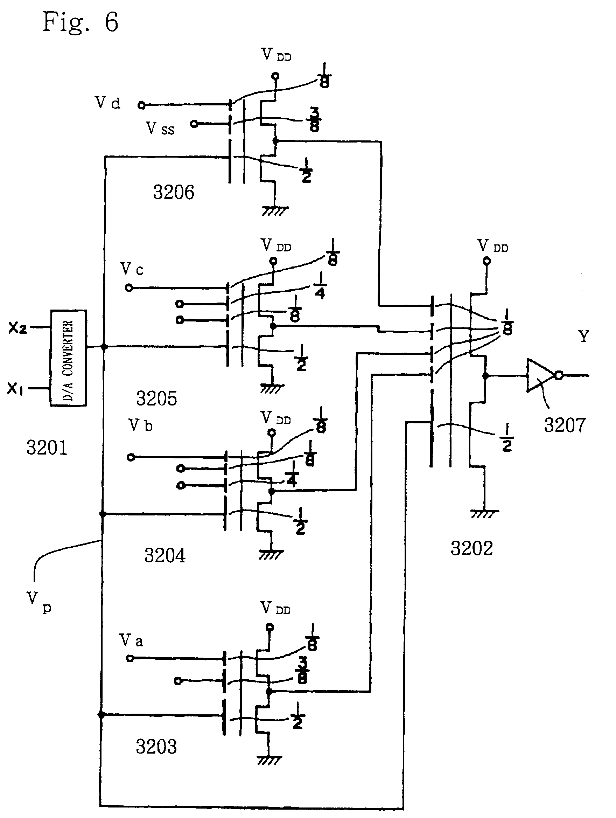

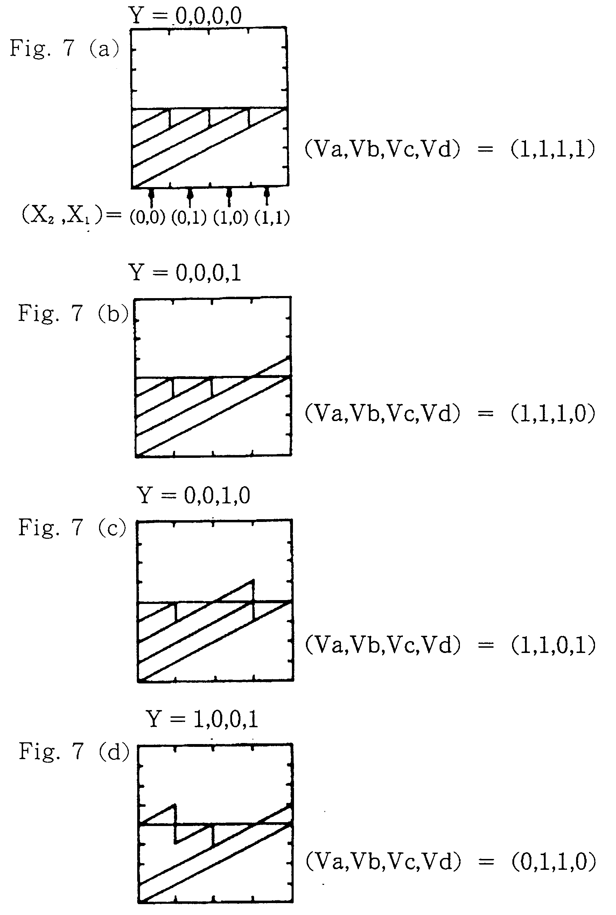

Next, an example of an SHL circuit will be explained using Figs. 6 and 7. In Fig. 6, a circuit diagram is shown. Reference 301 indicates a D/A converter which is provided at the input stage; this generates a 4-level multivalent variable $V_P$ with respect to combinations of two inputs $X_1$ and $X_2$. $V_p$ is inputted into the main gate of the 5 $\nu$MOS inverters 302 ~ 306. The relationships between $X_1$ and $X_2$ and $V_p$ are shown on the horizontal axis of the FPDs shown in Fig. 7(a). $V_a$, $V_b$, $V_c$, and $V_d$ correspond to, for example, the control signal input terminals 104a ~ 104d of the operational block A of Fig. 1. In the figure, the fractions such as 1/2, 1/4, 1/8, and the like, indicate the capacitive coupling coefficients between the respective input gates and the floating gate, and these indicate, respectively, $(1/2) C_{TOT}$, $(1/4) C_{TOT}$, $(1/8) C_{TOT}$, and the like.

In the present circuit, signals having the two values of 0 or $V_{DD}$ are inputted into $V_a$, $V_b$, $V_c$, and $V_d$. The case in which $V_a = V_b = V_c = V_d = 1 (= V_{DD})$ is shown in the FPD of $\nu$MOS inverter 302 which is shown in Fig. 7(a). The FPDs of $V_a$, $V_b$, $V_c$, and $V_d$ relating to other combinations, and examples of outputs are shown in Fig. 7(a), (b), (c), and (d). It can be seen that the inversion signals of the signals inputted into $V_a$, $V_b$, $V_c$, and $V_d$ are outputted in response to $(X_2, X_1) = (0, 0), (0, 1), (1, 0)$, and $(1, 1)$. It is possible to designate the output pattern and to determine the form of the function directly by means of $V_a$, ~ $V_d$, so that the determination of the function can be easily conducted, and this is a major characteristic feature.

The circuit shown in Fig. 6 is only an example of an SHL, and it is of course the case that it is possible to use other SHLs which are described in the patent specification (Japanese Patent Application No. Hei 3-83135).

(Embodiment 2)

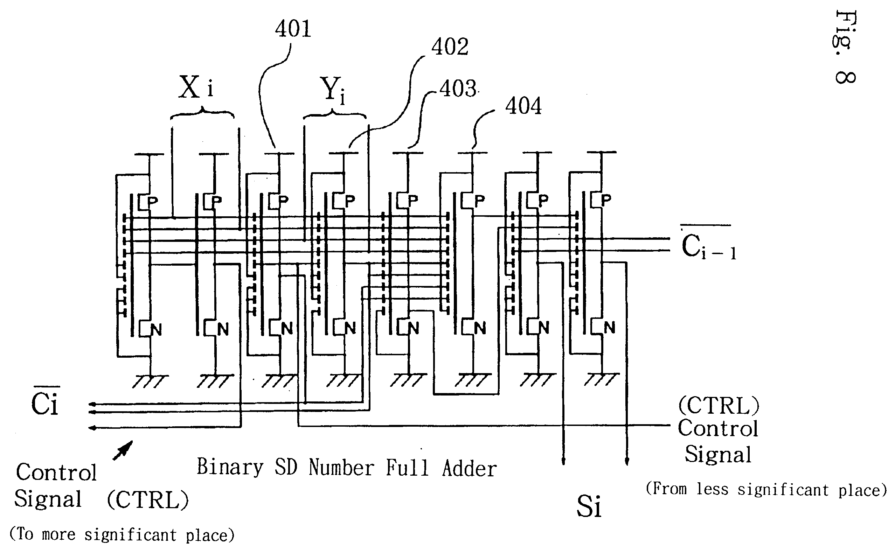

Next, a second embodiment of the present invention is shown in Fig. 8. This is a computing circuit which employs one $\nu$MOS inverter as an operating block and comprises 8 such blocks; it is a binary SD number adder. Conventionally, when conducting addition operations, addition was conducted starting with the least significant bit, carrying the result after each calculation, and proceeding to the next bit, so that when the bit length was long, there was an operational period delay in proportion to this. This constituted a great hindrance to high-speed operational processing.

The present embodiment realizes an adder in which the carry over only affects the immediately following place, so that there is no so-called "carry over propagation"; this is realized in a simple manner for the first time by using SHL circuits, and altering the functions of a portion of the circuit blocks using a portion of the operational results. Prior to the explanation of the present embodiment, the SD numerical system will be explained.

The Signed-Digit (SD) numerical system [1] is a numerical system which expresses signals having a plurality of values. What is meant by an "SD numerical system" is a method of expression having a large expressive capacity; for this reason, it has superior characteristic features. For example, in an SD number adder, the carry propagation is limited to one stage irrespective of word length, so that operations proceed essentially in parallel. If this characteristic feature is taken advantage of, high speed operation becomes possible.

What is meant by a "binary SD number" is the number X which is defined as shown below.

$$X = a_{n-1} 2^{n-1} + a_{n-2} 2^{n-2} + ... + a_1 2 + a_0$$
$$a_i \in \{-1, 0, 1\}$$

That is to say, in this numerical system, one place (one bit) can have 3 values; however, this is a binary number, not a base 3 number. That is to say, the numerical system has a larger expressive capacity. For example, $(1, -1, 0)$ and $(0, 1, 0)$ can be expressed by the same binary SD number. Consideration will now be given to the addition of SD numbers. The i-place of 2 binary SD numbers will be represented by $x_i$ and $y_i$, and the linear sum thereof is represented by $z_i$. .

$$x_i \in \{-1, 0, 1\}$$
$$y_i \in \{-1, 0, 1\}$$
$$z_i = x_i + y_i \in \{-2, -1, 0, 1, 2\}$$

With respect to this $z_i$, a carry $c_i$ and an intermediate sum $w_i$ in accordance with the following formula:

$$z_i = 2c_i + w_i$$

$$c_i, w_i \in \{-1, 0, 1\}$$

are determined; however, at this time, the carry and intermediate sum may be determined under the conditions shown in Table 1 in consideration of the linear sum $z_{i-1}$ of the less significant bit.

Table 1

| Table of the true values of the carry c and the intermediate sum w of an SD adder. | | | |
|---|---|---|---|
| $z_i$ | $z_{i-1}$ | $c_i$ | $w_i$ |
| 2 | * | 1 | 0 |
| 1 | $\geq 0$ | 1 | -1 |
|  | $< 0$ | 0 | 1 |
| 0 | * | 0 | 0 |
| -1 | $< 0$ | -1 | 1 |
|  | $\geq 0$ | 0 | -1 |
| -2 | * | -1 | 0 |

If the intermediate sum $w_i$ and the carry $c_{i-1}$ obtained from the less significant bit which are obtained here are added in a linear manner, the final sum $s_i$ is obtained. During the determination of the conditions described above, a carry is generated in consideration of the linear sum of the less significant bit, so that there is no carry over generated in the calculation which obtains the final sum. Accordingly, carry propagation is limited to the adjacent bit. The foregoing is the SD numerical additional algorithm.

In order to realize this algorithm using $\nu$MOS, first, binary SD numbers having 3 values were coded into 2-bit binary numbers. This is because when a $\nu$MOS inverter is employed, the output of the inverter has two values. Tables 2 and 3 show coding tables.

Table 2

| Coding of binary SD numbers and 2-bit binary numbers | | |
|---|---|---|
| Binary SD | Binary Number | |
| 1 | 1 | 1 |
| 0 | 0 | 1 |
| -1 | 0 | 0 |

Table 3

| Coding of the linear sum w | |
|---|---|
| z | x + y |
| 2 | Four 1's |
| 1 | Three 1's |
| 0 | Two 1's |
| -1 | One 1 |
| -2 | One 1 |

When transforming SD numbers having three values into 2-bit binary numbers, coding was conducted focusing on the number of 1's. With respect to z, which is the linear sum of x and y, this was coded by one number contained between x and y. The true value table of the SD addition described above is rewritten in accordance with this coding. Furthermore, the true value table divided into two based on whether $z_{i-1}$, which is the linear sum of the less significant place, is greater than or equal to 0, or less than 0.

The rewritten true value table is shown in Table 4.

## Table 4

## True value table rewritten for νMOS logic circuits

### (a) Control signal is "1"     (b) Control signal is "0"

### $(z_{i-1} \geq 0)$     $(z_{i-1} < 0)$

| $z_i$ | $c_i$ | | $w_i$ | |
|---|---|---|---|---|
| Four 1's | 1 | 1 | 0 | 1 |
| Three 1's | 1 | 1 | 0 | 0 |
| Two 1's | 0 | 1 | 0 | 1 |
| One 1 | 0 | 1 | 0 | 0 |
| Zero 1 | 0 | 0 | 0 | 1 |

| $z_i$ | $c_i$ | | $w_i$ | |
|---|---|---|---|---|
| Four 1's | 1 | 1 | 0 | 1 |
| Three 1's | 0 | 1 | 1 | 1 |
| Two 1's | 0 | 1 | 0 | 1 |
| One 1 | 0 | 0 | 1 | 1 |
| Zero 1 | 0 | 0 | 0 | 1 |

Here, what is meant by the "control signal" is a variable which takes a value of "1" when the linear sum $z_{i-1}$ of the less significant bit is "0" or more, and takes a value of "0" when this sum is less than "0". With respect to $c_i$ and $w_i$ in the true value table, the left-hand column divided by a dotted line represents the more significant bit, while the right hand column represents the less significant bit.

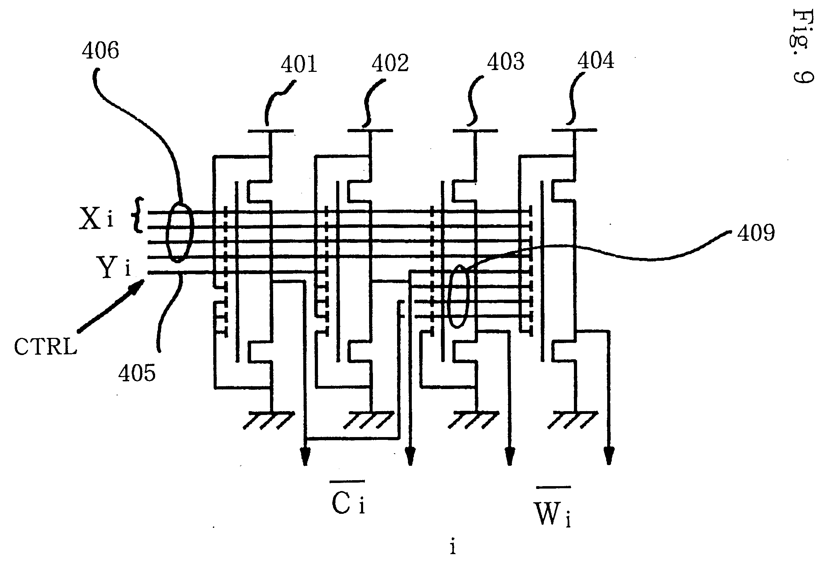

The circuit diagram of Fig. 9 shows a realization of the true value table shown in Table 4 using νMOS logic circuits. This figure depicts the circuit blocks 401 ~ 404 of Fig. 8; the circuit outputs the inverted signals of carry $C_i$ and the sum $W_i$, respectively, of $X_i$ and $Y_i$.

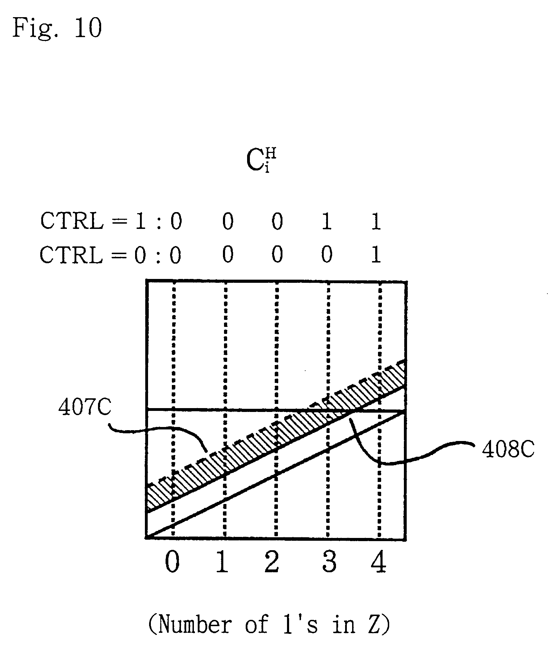

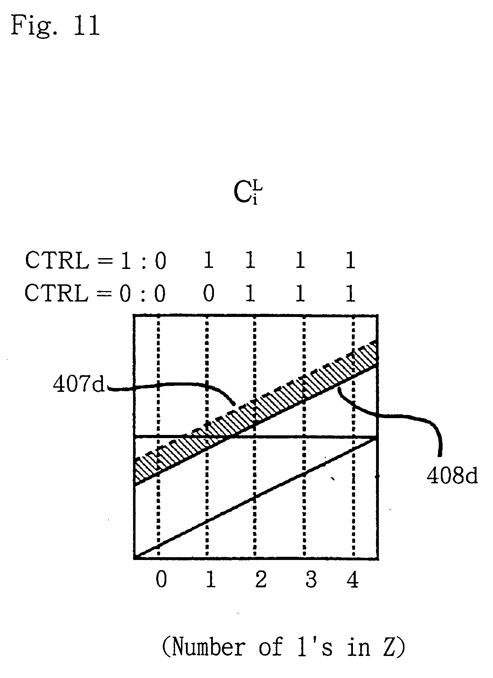

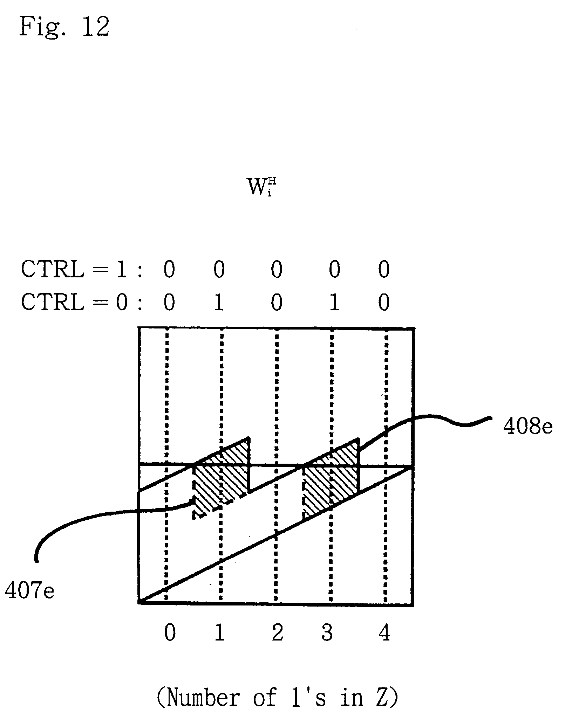

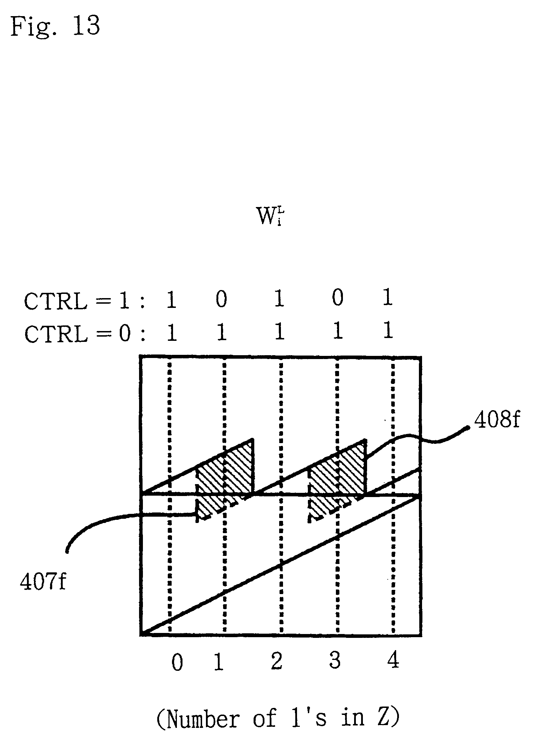

A symmetrical function νMOS logic circuit having a total of 4-bit inputs, the two bits of input x and the two bits of input y, is employed. The number of 1's, which is the result of the coding of z, is employed in an unchanged manner as the main variable $V_p$ of the νMOS inverter. Figs. 10, 11, 12, and 13 show FPDs of νMOS inverters 401 ~ 404, in which the number of 1's within Z is depicted as the main variable $V_p$.

For example, in the νMOS inverter which calculates the more significant bit of carry c (Fig. 10), when the control signal CTRL is "0", "00001" is set as the target function (the output characteristics), and when the control function is "1", the target function is set to "00011". That is to say, the input terminal 405 of the control signal CTRL functions as a control signal input terminal which controls the operating function of operational blocks 401 and 402. The terminal 406 into which $x_i$ and $y_i$ are inputted is a data signal input terminal. In Figs. 10 ~ 13, the form of the function when CTRL = 1 is shown by the dotted line and the shaded area (407c ~ f), while the form of the function when a CTRL = 0 is shown by the solid line (408c ~ f).

In this way, the SD number adder (SDFA) circuit shown in Fig. 9 is realized. In order to simplify the circuit, carry c and intermediate sum w are outputted as inverted values. The νMOS inverter which calculates the more significant bit of the carry described above is the left-most inverter 401. Here, consideration will be given to the νMOS inverter 403 which calculates the more significant bit of the intermediate sum w. When the control signal is "0", the target function of this neuron circuit is "01010". This is an XOR function. When the control signal is "1", the target function is "00000". In this way, in order to calculate the more significant bit of the intermediate sum w, this νMOS inverter operating unit has a function which is changed when an XOR function is calculated by means of the control signal CTRL, or when, irrespective of input, a value of "0" is outputted. Here, the output of νMOS inverters 401 and 402 which calculate the carry is inputted into the control signal input terminal 409 which determines the function of operating units 403 and 404, and the function thereof can be changed where necessary. By means of this, the calculation of the intermediate sum is realized.

8

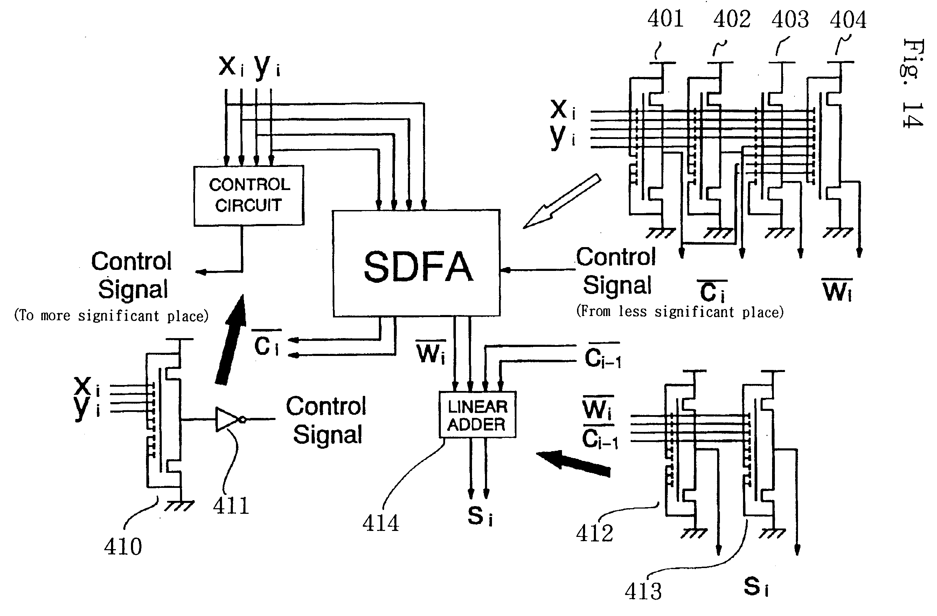

Fig. 14 shows all the circuitry corresponding to one decimal place which conducts the addition of the binary SD numbers. The control signal CTRL is produced by means of a control circuit comprising one νMOS inverter (410) and one standard inverter (411). Furthermore, s, which represents the final addition result, is obtained by conducting the addition of the intermediate sum w and the carry from the less significant place by means of a linear adder 414, comprising 2 νMOS inverters 412 and 413.

In the above manner, a binary SD number adder can be constructed in an extremely simple manner by means of the present invention. The number of transistors required is only 16 per decimal place, and this was heretofore not realizable by means of such simple circuitry.

The binary SD number adder described above is a circuit which outputs signals in which binary SD numbers are coded in 2-bit binary numbers. If the binary SD numbers are expressed as positive voltage values, these can be directly coupled to the floating gate of the νMOS inverter as signals having three values. Furthermore, the output may be outputted after converting the 2-bit binary output to a three-value SD number at the νMOS source follower circuit. That is to say, the SD adder described in the present embodiment is a circuit which is capable of easy interface with binary signals and signals having a plurality of values, so that it has an extremely broad range of applications.

(Embodiment 3)

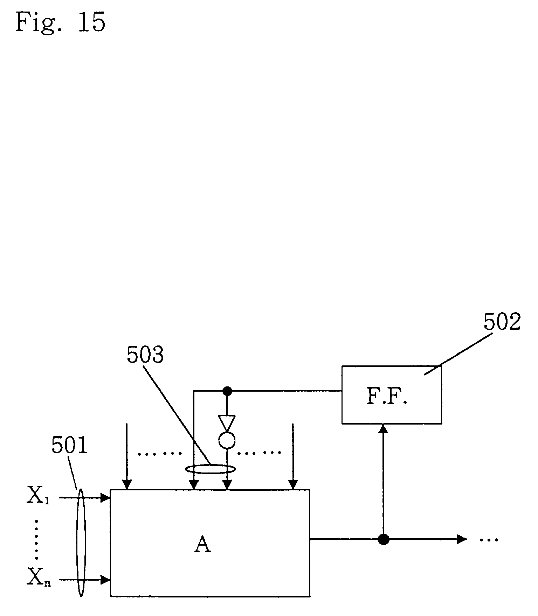

A third embodiment of the present invention is shown in Fig. 15. Here, a representative example employing an operating unit A having a number n of input terminals for data signals is shown. The output of unit A is applied to flip-flop 502, and the output thereof is again applied to the portion 503 of the control input terminal which determines the function of the unit A itself. This flip-flop may also be a shift register which is controlled by means of a clock. When the output of A has a predetermined delay applied thereto and is then inputted into the control input terminal in this manner, the function thereof changes based on the past operation results. That is to say, the output of the unit itself is subjected to feedback and determines the function thereof. By means of adding this type of memory function, it is possible to provide an even wider range of operating functions.

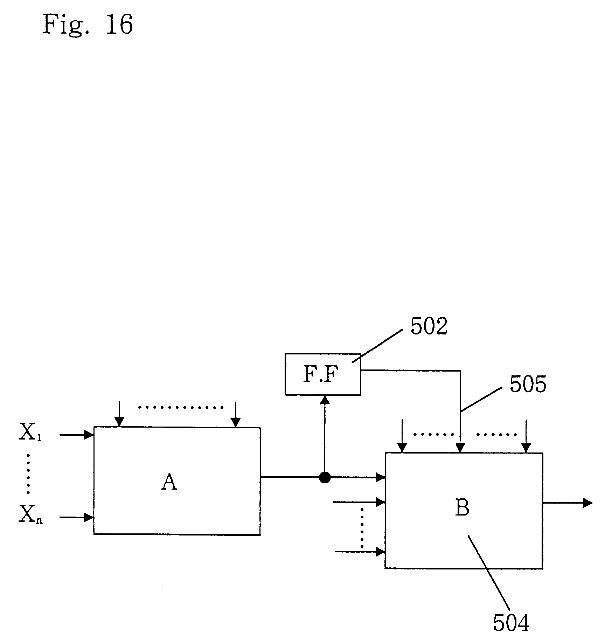

The output of the memory element or a delay element 502 may be inputted into the control input terminal 505 of a unit B (504) different from the unit A, in the manner shown in Fig. 16.

(Embodiment 4)

Fig. 6 shows a fourth embodiment of the present invention; the output of A is inputted into a binary counter 506. This is an example in which the number of times A has a value of "1" is counted, and the three bits into which this number is encoded in a binary fashion are applied to the determination of the function. It is of course the case that in this case as well, this may be used in order to determine the function of other blocks.

In accordance with the present invention described above, the circuit itself may change structure or produce new functions based on its own operational results, so that it is possible to realize flexible information processing analogous to that of living things, such as learning, adaptation, and self-multiplication, which are necessary in a society dealing with a high level of information. Additionally, it is possible to realize computers having completely different algorithms and architecture from those which have previously existed.

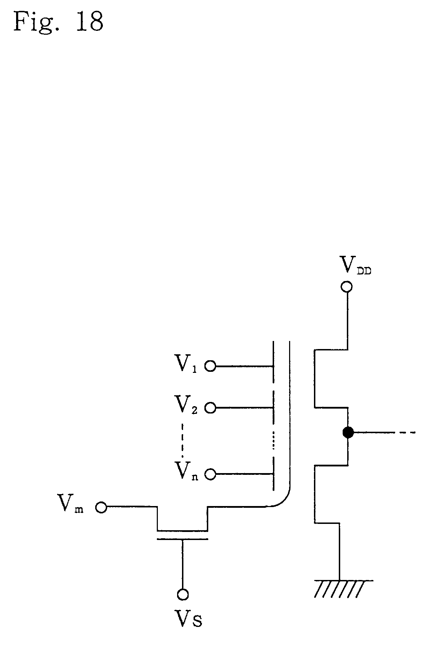

In the foregoing, only that case was shown in which the floating gate of the νMOS inverter was in a constantly floating state; however, as shown in Fig. 18, a switch transistor 701 may be added to the floating gate, and a given voltage $V_m$ may be connected. Alternatively, the value of this potential may be employed as other data. Furthermore, the signal $V_s$ which controls the switch may of course be synchronized with a system clock, and the charge within the floating gate may be returned to the original state each time, or the current flowing to the inverter may be cut, or the like.

Industrial Applicability

By means of the present invention, it is possible to realize a novel computing and processing device which is capable of flexible information processing analogous to that of living things, such as learning, adaptation, and self-multiplication, and high level information processing is possible.

**Claims**

1.  A computing device, comprising a plurality of first input terminals and a plurality of second input terminals, and a plurality of operational units which excute given operations, stipulated by means of control signals inputted into said second input terminals, with respect to data signals inputted into said first input terminals, and which each have at least one output terminal for outputting results thereof; characterized in that the output signal outputted from one of said output terminals or the result of a given operational processing of this output signal, is inputted into at least one of said second input terminals.

2.  A computing device in accordance with Claim 1, characterized in that said operational units contain inverters comprising at least one stage of neuron MOS transistors.

Fig. 1

Fig. 2 (a)

Fig. 2 (b)

12

Fig. 3

Fig. 4

Fig. 5

EP 0 685 808 A1

Fig. 6

Fig. 7 (a)

Y = 0,0,0,0

$(Va,Vb,Vc,Vd) = (1,1,1,1)$

$(X_2,X_1) =$ (0,0) (0,1) (1,0) (1,1)

Fig. 7 (b)

Y = 0,0,0,1

$(Va,Vb,Vc,Vd) = (1,1,1,0)$

Fig. 7 (c)

Y = 0,0,1,0

$(Va,Vb,Vc,Vd) = (1,1,0,1)$

Fig. 7 (d)

Y = 1,0,0,1

$(Va,Vb,Vc,Vd) = (0,1,1,0)$

# Fig. 8

Binary SD Number Full Adder

Fig. 9

Fig. 10

$$C_i^H$$

CTRL = 1 : 0      0      0      1      1

CTRL = 0 : 0      0      0      0      1

407C               408C

0   1   2   3   4

(Number of 1's in Z)

Fig. 11

$$C_i^L$$

CTRL = 1 : 0   1   1   1   1
CTRL = 0 : 0   0   1   1   1

407d

408d

0   1   2   3   4

(Number of 1's in Z)

Fig. 12

$W_i^H$

CTRL = 1 :   0     0     0     0     0
CTRL = 0 :   0     1     0     1     0

408e

407e

    0     1     2     3     4

(Number of 1's in Z)

Fig. 13

$$W_i^L$$

CTRL = 1 :  1   0   1   0   1
CTRL = 0 :  1   1   1   1   1

408f

407f

0   1   2   3   4

(Number of 1's in Z)

Fig. 14

401 402 403 404

$x_i$
$y_i$

Control Signal
(From less significant place)

$\overline{C_i}$

$\overline{W_i}$

SDFA

CONTROL CIRCUIT

$x_i y_i$

$\overline{C_i}$

Control Signal
(To more significant place)

Control Signal

411

410

$x_i$
$y_i$

$\overline{W_i}$

LINEAR ADDER

414

$\overline{C_{i-1}}$

$S_i$

$\overline{W_i}$
$\overline{C_{i-1}}$

412

413

$S_i$

Fig. 15

Fig. 16

Fig. 17

BINARY COUNTER

506

X₁

Xn

A

Fig. 18

$V_{DD}$

$V_1$

$V_2$

$V_n$

$V_m$

$Vs$

International application No.

PCT/JP94/00264

**A.    CLASSIFICATION OF SUBJECT MATTER**

Int. Cl$^5$   G06G7/60

According to International Patent Classification (IPC) or to both national classification and IPC

**B.    FIELDS SEARCHED**

Minimum documentation searched (classification system followed by classification symbols)

Int. Cl$^5$   G06G7/60, G06F15/18

Documentation searched other than minimum documentation to the extent that such documents are included in the fields searched

Jitsuyo Shinan Koho            1975 - 1994
Kokai Jitsuyo Shinan Koho      1974 - 1994

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP, A, 4-71063 (Fujitsu Ltd.), March 5, 1992 (05. 03. 92), (Family: none) | 1, 2 |

☐  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier document but published on or after the international filing date | "X"   document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"   document member of the same patent family |

| Date of the actual completion of the international search | Date of mailing of the international search report |
|---|---|
| June 17, 1994 (17. 06. 94) | July 19, 1994 (19. 07. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)